## Europäisches Patentamt

## European Patent Office

## Office européen des brevets

(11) Veröffentlichungsnummer: **0 134 496**

**B1**

(12) # EUROPÄISCHE PATENTSCHRIFT

(45) Veröffentlichungstag der Patentschrift:
18.03.87

(51) Int. Cl.⁴: **H 02 M 7/162**, H 02 H 7/127

(21) Anmeldenummer: **84108190.4**

(22) Anmeldetag: **12.07.84**

(54) Gleichrichter.

(30) Priorität: **05.08.83 CH 4258/83**

(43) Veröffentlichungstag der Anmeldung:
**20.03.85 Patentblatt 85/12**

(45) Bekanntmachung des Hinweises auf die Patenterteilung:
**18.03.87 Patentblatt 87/12**

(84) Benannte Vertragsstaaten:
**AT CH DE LI SE**

(56) Entgegenhaltungen:
**EP-A-0 034 845**
**DE-A-1 538 995**
**DE-A-1 638 592**

(73) Patentinhaber: **BBC Aktiengesellschaft Brown, Boveri & Cie., Haselstrasse, CH- 5401 Baden (CH)**

(72) Erfinder: **Ernst, Dieter, Austrasse 10, CH- 8951 Fahrweid (DE)**
Erfinder: **Good, Paul, Kirchweg 10 Büel, CH- 8887 Mels (DE)**
Erfinder: **Rüegg, Rudolf, Bodenacherstrasse 83, CH- 8121 Benglen (DE)**

## Beschreibung

Bei der Erfindung wird ausgegangen von einem Gleichrichter nach dem Oberbegriff des Patentanspruchs 1. Die Erfindung betrifft auch eine Verwendung dieses Gleichrichters.

Mit dem Oberbegriff nimmt die Erfindung auf einen Stand der Technik von Gleichrichtern Bezug, wie er in der DE-A-1 538 995 beschrieben ist. Dort ist eine Anordnung zur Schnellentregung einer Gleichstrommaschine angegeben, deren Erregerwicklung über einen Brückengleichrichter mit Thyristoren in den Brückenzweigen an eine Wechselspannungsquelle angeschlossen ist. Zur Überspannungsbegrenzung ist der Erregerwicklung eine Reihenschaltung eines Erregerwiderstandes mit einer in Sperrichtung des Erregerstromes gepolten Diode parallelgeschaltet. Den Brückenthyristoren ist eine Reihenschaltung eines Löschkondensators mit einem Löschthyristor parallelgeschaltet, wobei den Thyristoren der gleichen Brückenhälfte jeweils ein gemeinsamer Löschkondensator zugeordnet ist. Nachteilig dabei ist, dass für die beiden Löschkondensatoren eine besondere Ladespannungsquelle vorzusehen ist, welche den betreffenden Löschkondensator jeweils mit der für die Löschung der zugeordneten Brückenthyristoren erforderlichen Polarität auflädt.

Die Erfindung, wie sie im Patentanspruch 1 definiert ist, löst die Aufgabe, einen Gleichrichter mit integriertem Überspannungsbegrenzer anzugeben, der eine verbesserte Löschbereitschaft für die Lastthyristoren im Störfall aufweist.

Ein Vorteil der Erfindung besteht darin, dass die Löscheinrichtung des Gleichrichters während des Betriebes immer löschbereit ist. Sie benötigt keinen zusätzlichen Ladekreis und kommt mit wenig Bauelementen aus. Der erfindungsgemässe Gleichrichter zeichnet sich weiterhin dadurch aus, dass die Aufladung eines jeweiligen Löschkondensators nicht über den zugehörigen zu löschenden Lastthyristor erfolgt, sondern über den bzw. die anderen zu löschenden Lastthyristoren.

Gemäss einer vorteilhaften Weiterbildung der Erfindung wird die Stromanstiegsgeschwindigkeit di/dt auf einen für die Halbleiterventile zulässigen Wert begrenzt. Die Reihenschaltung von Entregungswiderstand und Entregungsdiode ermöglicht im Störfall eine einfache und schnelle Umwandlung magnetischer Feldenergie eines induktiven Stromverbrauchers in Wärme.

Gegenüber einer Brückenschaltung hat die Mittelpunktschaltung den Vorteil, dass sie weniger Bauelemente benötigt. Da an den Löschkondensatoren im Betrieb die Spannung $2U_o$ ($U_o$ = Mittelpunktspannung) anliegt, kann die Kapazität dieser Kondensatoren halb so gross sein wie bei Löschkondensatoren in der Brückenschaltung. Verwendet man zusätzlich zu den zu löschenden Lastthyristoren antiparallel geschaltete Thyristoren, so kann eine Umpolung des Gleichstromausgangs vorgenommen werden, so dass sich ein etwa an den Gleichrichter anzuschliessender Polumschalter erübrigt.

Dieser Gleichrichter eignet sich besonders zur Schnellentregung von Motorfeldern.

Zum einschlägigen Stand der Technik wird zusätzlich auf die DE-B-1 638 592 verwiesen. Dort ist eine Anordnung zur Schnellentregung eines induktiven Stromverbrauchers mit einem Dreiphasen-Brückengleichrichter mit Lastthyristoren in den Brückenzweigen angegeben, bei der ein spannungsabhängiger Widerstand in Reihe mit einer Diode parallel zu dem Stromverbraucher geschaltet ist. Zur Löschung der Lastthyristoren ist eine Löscheinrichtung mit Kondensatoren, die in gegenüberliegenden Brückenzweigen einer Brückenschaltung angeordnet sind, vorgesehen, wobei in den jeweils anderen Brückenzweigen ein Ladewiderstand für die Kondensatoren und in der Brückendiagonale ein im Störfall zündbarer Löschthyristor angebracht ist. Über den Löschthyristor können die Kondensatoren in Reihe geschaltet werden und sich über die Lastthyristoren des Gleichrichters entladen, so dass diese erlöschen.

Nachteilig ist die Aufladung der Kondensatoren über Ladewiderstände. Ist der Ladewiderstand zu hochohmig, so erfolgt die Aufladung zu langsam, so dass bei einem frühen Störfall die Ladung der Kondensatoren nicht ausreicht, um die Lastthyristoren zu löschen. Ist der Ladewiderstand zu niederohmig, so wird der Löschkreis gestört, da dann ein zu hoher Anteil des Löschstromes über diesen fliesst.

Ferner ist aus der EP-A1 0 034 845 eine elektrische Schutzschaltung für eine induktive Last am Gleichstromausgang eines Gleichrichters bekannt. Für den Löschkondensator wird dort kein Ladewiderstand benötigt, es ist jedoch ein eigener Ladekreis mit Transformator und Gleichrichter erforderlich, um den Kondensator stets geladen zu halten. Ohne einen solchen aufwendigen Ladekreis würde sich der Kondensator im Laufe der Zeit entladen und im Störfall nicht funktionsfähig sein.

Die Erfindung wird nachstehend anhand von Ausführungsbeispielen erläutert. Es zeigen:

Fig. 1 eine Entregungsschaltung für eine Stromrichterlokomotive mit einer Nutzbremseinrichtung und einem erfindungsgemässen Brücken-Gleichrichter zur Stromversorgung der Fremdfeldwicklung von Fahrmotoren mit integriertem Überspannungsbegrenzer,

Fig. 2 eine Gleichrichterschaltung mit Mittelpunktanzapfung und integriertem Überspannungsbegrenzer und

Fig. 3 eine Gleichrichterschaltung mit Mittelpunktanzapfung, integriertem Überspannungsbegrenzer und Umpolungsmöglichkeit.

In allen Zeichnungen sind dieselben Teile mit denselben Bezugsziffern versehen.

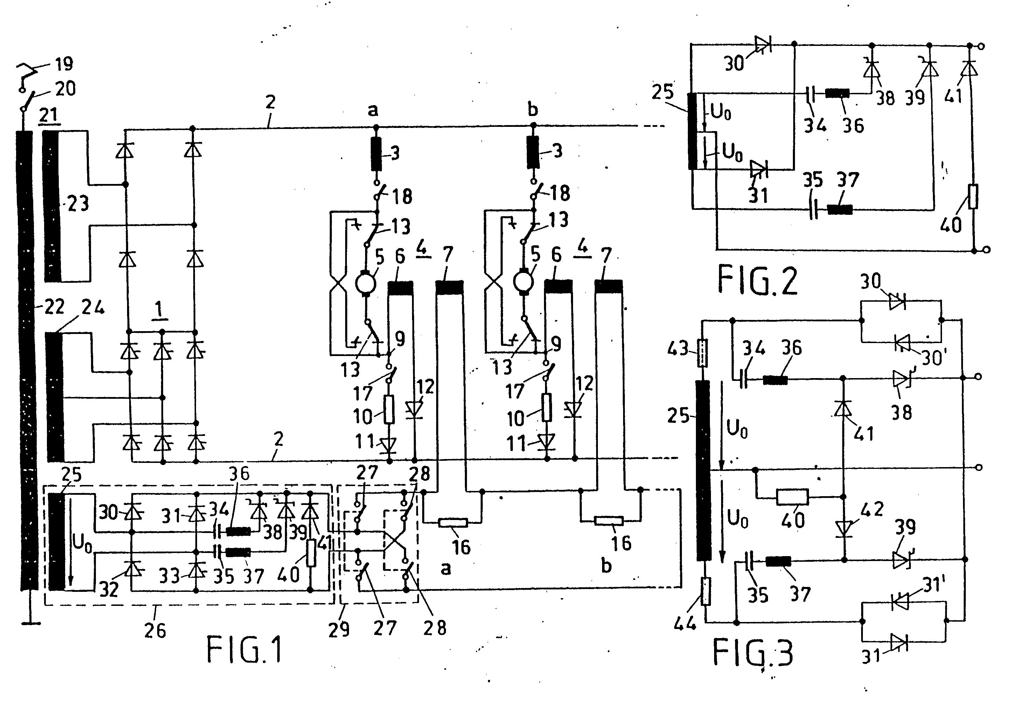

In der Fig. 1 ist eine Schaltung einer mehrmotorigen Lokomotive gezeigt, von der nur zwei Motoreinheiten a und b dargestellt sind. Gemeinsam für alle Motoreinheiten a, b,... ist ein Stromabnehmer 19, ein Hauptschalter 20 und ein Transformator 21 mit einer Primärwicklung 22 und drei Sekundärwicklungen 23 bis 25. Die Traktionswicklungen 23 und 24 speisen einen Traktionsstromrichter 1. Die Erregerwicklung 25 speist einen Erregerstromrichter 26, der über einen Polumschalter 29 mit einem Fremdfeldschütz 27 für "Fahren" und einen Fremdfeldschütz 28 für "Bremsen" Fremdfeldwicklungen 7 der parallel geschalteten Motoreinheiten a, b,... speist.

An den Traktionsstromrichter 1 ist über eine Ausgangsleitung 2 und eine Glättungsdrosselspule 3 ein Fahrmotor 4 angeschlossen, der eine Ankerwicklung 5, eine Seriefeldwicklung 6 und die Fremdfeldwicklung 7 enthält. Die Fremdfeldwicklung 7 ist an den Erregerstromrichter 26 angeschlossen. Zwischen dem Anschlusspunkt 9 der Ankerwicklung 5 und der Minus-Ausgangsleitung 2 des Traktionsstromrichters 1 ist in Serie ein Dämpfungswiderstand 10 und eine Diode 11 angeschlossen. Zwischen dem anderen Ende der Seriefeldwicklung 6 und derselben Ausgangsleitung 2 ist ein Thyristor 12 eingeschaltet. Die Ankerwicklung 5 liegt zwischen zwei Wendeschaltern 13.

Die Seriefeldwicklung 6 ist im Bremsbetrieb normalerweise stromlos. Bei einem Stromrichterkippen, das z.B. bei einem Ausfall der Netzspannungen, bei einem Kurzschluss, bei Stromabnehmersprüngen oder bei einem Nichtzünden von Stromrichter-Thyristoren auftreten kann, wird die Seriefeldwicklung 6 eingeschaltet und kompensiert den Fluss des Fremdfeldes. Somit wird der Fahrmotor 4 entregt. Die Seriefeldwicklung 6 wird mit dem Thyristor 12 mit Hilfe der Spannung über dem Dämpfungswiderstand 10 eingeschaltet. Die Diode 11 dient zur Reduzierung der Entregungszeit der Seriefeldwicklung 6.

Gleichzeitig muss das magnetische Feld der Fremdfeldwicklung 7 schnell abgebaut werden. Dies erfolgt über einen Entregungswiderstand 40 und eine dazu in Reihe geschaltete Entregungsdiode 41 parallel zum Ausgang des Erregerstromrichters 26. Widerstände 16 dienen zur normalen Dämpfung der Oberschwingungen der Fahrmotore 4.

Die Wechselspannung $U_o$ der Erregerwicklung 25 ist dem Wechselstromeingang einer Brückenschaltung mit Erregerthyristoren 30 - 33 zugeführt, deren Gleichstromausgang den Eingangsklemmen des Polumschalters 29 zugeführt ist. Parallel zu den Erregerthyristoren 30 bzw. 31 sind zugehörige Löscheinrichtungen, bestehend aus einer Reihenschaltung aus einem Löschkondensator 34 bzw. 35, einer Löschdrossel 36 bzw. 37 und einem Löschthyristor 38 bzw. 39, geschaltet. Die Löschthyristoren sind rückwärtsleitende Thyristoren, die kathodenseitig gesteuert sind und in der gleichen Richtung gepolt sind wie die zu löschenden Erregerthyristoren 30, 31. Die Reihenfolge der drei Bauelemente der Löscheinrichtung ist selbstverständlich beliebig. Die Erregerthyristoren 32 und 33 weisen keine Löscheinrichtung auf; sie können auch durch Dioden ersetzt werden.

Sobald eine Störung, z.B. ein Stromrichterkippen, auftritt, werden die Löschthyristoren von einer an sich bekannten, nicht dargestellten Sensorschaltung gezündet, so dass derjenige der beiden Erregerthyristoren 30, 31, der gerade Strom führt, gelöscht wird. Der einsetzende Entladestrom des Löschkondensators 34 bzw. 35 fliesst durch die Drossel 36 bzw. 37, durch den Löschthyristor 38 bzw. 39, durch die Fremdfeldwicklung 7, den Erregerthyristor 32 bzw. 33 und die Sekundärwicklung 25 des Transformators 21 zurück zum Löschkondensator. Dabei ersetzt der Entladestrom für eine kurze Zeit den vom Erregerthyristor 30 bzw. 31 gelieferten Strom, so dass der Erregerthyristor während dieser Zeitdauer stromlos wird. Löschkondensator und Löschdrossel sind so zu dimensionieren, dass diese Zeitdauer grösser als die Freiwerdezeit der Erregerthyristoren ist.

Gleichzeitig erhält ein ebenfalls nicht dargestellter Thyristorsteuerkreis ein Abschaltsignal, so dass die Erregerthyristoren 30 - 33 keine Zündimpulse mehr erhalten. Nach dem Abschalten der Erregerthyristoren wird dann entsprechend der Lenzschen Regel an den Klemmen der Fremdfeldwicklung 7 des Fahrmotors 4 eine der Spannung des Erregerstromrichters 26 entgegengesetzte Spannung induziert, die einen dem Zustand vor der Abschaltung entsprechenden Belastungsstrom aufrechterhält. Nun spricht der Überspannungsbegrenzer 40, 41 an. In dem Widerstand 40 wird die in der Feldwicklung 7 gespeicherte magnetische Feldenergie in Wärme umgewandelt, wobei der Strom entsprechend der Grösse der Induktivität und der Grösse des Widerstandes abklingt.

Während des Betriebs des Erregerstromrichters 26 wird der Löschkondensator 34 bzw. 35 über die Sekundärwicklung 25, den Erregerthyristor 31 bzw. 30, den Löschthyristor 38 bzw. 39 und Löschdrossel 36 bzw. 37 aufgeladen, d.h., der Löschkondensator wird nicht über den Erregerthyristor aufgeladen, den er im Störfall löscht. Eine besondere Spannungsquelle ist für die Aufladung des Kondensators nicht erforderlich; er bleibt auch dann aufgeladen, wenn längere Zeit kein Störfall eingetreten ist.

Fig. 2 zeigt eine andere Variante des Erregerstromrichters 26 von Fig. 1, welcher seine Wechselspannung $2U_o$ von einer Sekundärwicklung 25 mit einem Mittelpunktabgriff erhält. Der Mittelpunktabgriff bildet gleichzeitig den -Pol am Ausgang des Erregerstromrichters. Zur Gleichrichtung des Wechselstroms wird nur eine Brückenhälfte mit den Erregerthyristoren 30 und 31 benötigt, anstelle von vier Erregerthyristoren 30 - 33 in der Brückenschaltung gemäss Fig. 1.

Überspannungsbegrenzer 40, 41 und Löscheinrichtungen 34 - 39 stimmen im Schaltungsaufbau mit denen des Erregerstromrichters 26 von Fig. 1 überein. Wegen der doppelten Spannung ($2U_o$ statt $U_o$ gemäss Fig. 1) am Wechselstromeingang des Erregerstromrichters 26 können preisgünstigere und in ihren Abmessungen kleinere Löschkondensatoren 34 und 35 verwendet werden, die nur die halbe Kapazität im Vergleich zu den entsprechenden Löschkondensatoren 34, 35 gemäss Fig. 1 haben.

Fig. 3 zeigt eine weitere Variante eines Erregerstromrichters, der von einer Sekundärwicklung 25 eines Transformators mit einem Mittelpunktabgriff gespeist wird, wie bei der Schaltung gemäss Fig. 2, der jedoch gleichzeitig den Polumschalter 29 gemäss Fig. 1 ersetzt. Der Mittelpunktabgriff bildet hier einen ersten Ausgang des Erregerstromrichters. Antiparallel zu den Erregerthyristoren 30 und 31 sind jedoch Erregerthyristoren 30' und 31' geschaltet, die eine Umpolung der Spannung am Ausgang des Erregerstromrichters ermöglichen und damit die Funktion des Polumschalters 29 erfüllen, der dann bei einer Schaltung gemäss Fig. 1 entfallen kann.

Infolge der Umpolmöglichkeit der Ausgangsspannung des Erregerstromrichters gemäss Fig. 3 muss der Überspannungsbegrenzer an diese Schaltung angepasst werden. Der Entregungswiderstand 40 ist einerseits mit dem Mittelpunktabgriff der Sekundärwicklung 25 und andererseits über die Entregungsdiode 41 und den Löschthyristor 38 sowie über eine weitere Entregungsdiode 42 und den Löschthyristor 39 mit dem zweiten Ausgang des Erregerstromrichters verbunden. Dabei sind die Anoden der beiden Entregungsdioden 41 und 42 an den Entregungswiderstand 40 angeschlossen.

Die Sekundärwicklung 25 des Transformators 21 ist über flinke Sicherungen 43 bzw. 44 mit den Erregerthyristoren 30, 30' bzw. 31, 31' verbunden, um die Halbleiterbauelemente des Erregerstromrichters vor Überströmen zu schützen.

Die Erfindung ist auf das in den Zeichnungen Dargestellte selbstverständlich nicht beschränkt. So könnten anstelle der rückwärtsleitenden Löschthyristoren auch Thyristoren mit antiparallel geschalteter Diode verwendet werden. Anstelle des Entregungswiderstandes 40 ist auch ein Varistor verwendbar. Wichtig ist, dass die Erregerthyristoren des Erregerstromrichters im Störfall sicher und schnell gelöscht werden können und dass die magnetische Feldenergie des induktiven Verbrauchers in einem Widerstand schnell in Wärme umgesetzt wird, so dass der Strom durch den Verbraucher im Störfall schnell abnimmt. Während des Betriebes des Erregerstromrichters muss die Löscheinrichtung für die Erregerthyristoren stets löschbereit sein, insbesondere müssen die Löschkondensatoren stets geladen sein.

**Patentansprüche**

1. Gleichrichter, der eingangsseitig einen Wechselstromanschluss und ausgangsseitig einen Gleichstromanschluss aufweist,
   a) mit mindestens einem Lastthyristor für jede Phase des Wechselstroms,
   b) mit mindestens einer Löscheinrichtung für die Lastthyristoren,
   c) mit einem Überspannungsbegrenzer (40, 41) parallel zum Gleichspannungsausgang des Gleichrichters,
   d) wobei für jede Phase des Wechselstroms eine eigene Löscheinrichtung (34, 36, 38; 35, 37, 39) vorgesehen ist,
   e) die parallel zu einem zu löschenden Lastthyristor (30, 31) geschaltet ist, dadurch gekennzeichnet,
   f) dass jede der Löscheinrichtungen einen eigenen Löschkondensator (34, 35) und einen dazu in Reihe geschalteten rückwärtsleitenden Löschthyristor (38, 39) aufweist, der in derselben Richtung gepolt ist, wie der zugehörige zu löschende Lastthyristor.

2. Gleichrichter nach Anspruch 1, dadurch gekennzeichnet, dass jede Löscheinrichtung eine Löschdrossel (36, 37) aufweist, die mit dem Löschkondensator (34, 35) und dem rückwärtsleitenden Löschthyristor (38, 39) in Reihe geschaltet ist.

3. Gleichrichter nach Anspruch 1 oder 2, dadurch gekennzeichnet, dass der Überspannungsbegrenzer mindestens eine Entregungsdiode (41, 42) aufweist, die mit einem Entregungswiderstand (40) in Reihe geschaltet ist.

4. Gleichrichter nach einem der Ansprüche 1 bis 3, dadurch gekennzeichnet, dass die zu löschenden Lastthyristoren (30, 31) Brückenzweige einer Gleichrichterbrücke bilden.

5. Gleichrichter nach einem der Ansprüche 1 bis 3, dadurch gekennzeichnet,
   a) dass der Wechselstromanschluss eine Transformatorsekundärwicklung (25) mit einem Mittelpunktabgriff aufweist, wobei der Mittelpunktabgriff einen ersten Gleichstromausgang des Gleichrichters bildet, und
   b) dass die beiden Enden der Transformatorsekundärwicklung (25) über je einen zu löschenden Lastthyristor (30, 31) mit einem zweiten Gleichstromausgang des Gleichrichters verbunden sind.

6. Gleichrichter nach Anspruch 5, dadurch gekennzeichnet, dass jedem dieser zu löschenden Lastthyristoren (30, 31) ein Lastthyristor (30', 31') antiparallel geschaltet ist.

7. Gleichrichter nach Anspruch 5 oder 6, dadurch gekennzeichnet, dass der Mittelpunktabgriff der Transformatorsekundärwicklung (25) über den Entregungswiderstand (40) und einerseits über eine erste Entregungsdiode (41) und einen ersten rückwärtsleitenden Löschthyristor (38) in einer ersten Löscheinrichtung eines ersten zu löschenden Lastthyristors (30), der mit einem ersten Ende der Transformatorwicklung (25) verbunden ist, und andererseits über eine zweite Entregungsdiode (42) und einen zweiten rückwärtsleitenden Löschthyristor (39) in einer zweiten Löscheinrichtung eines zweiten zu löschenden Lastthyristors (31), der mit einem zweiten Ende der Transformatorwicklung (25) verbunden ist und mit dem zweiten Gleichstromausgang des Gleichrichters in Wirkverbindung steht.

8. Verwendung eines Gleichrichters nach einem der Ansprüche 1 bis 7 zur Schnellentregung von Magnetfeldwicklungen von elektrischen Maschinen.

**Claims**

1. Rectifier which has at its input an alternating-current connection and at its output a direct-current connection,
   a) having at least one load thyristor for each phase of the alternating current,
   b) having at least one turn-off device for the load thyristors,
   c) having an over-voltage limiter (40, 41) in parallel with the direct-voltage output of the rectifier,
   d) a separate turn-off device (34, 36, 38; 35, 37, 39) being provided for each phase of the alternating current and
   e) being connected in parallel with a load thyristor (30, 31) to be turned off,
      characterized in
   f) that each of the turn-off devices has its own turn-off capacitor (34, 35) and a reverse-conducting gate turn-off thyristor (38, 39) which is connected in parallel with the capacitor and which is polarized in the same direction as the associated load thyristor to be turned off.

2. Rectifier according to Claim 1, characterized in that each turn-off device has a turn-off reactor (36, 37) which is connected in series with the turn-off capacitor (34, 35) and the reverse conducting gate turn-off thyristor (38, 39).

3. Rectifier according to Claims 1 or 2, characterized in that the over-voltage limiter is provided with at least one de-excitation diode (41, 42) which is connected in series with a de-excitation resistor (40).

4. Rectifier according to one of Claims 1 to 3, characterized in that the load thyristors (30, 31) to be turned off form bridge branches of a rectifier bridge.

5. Rectifier according to one of Claims 1 to 3, characterized in that
   a) the alternating-current connection is provided with a secondary transformer winding (25) having a centre tap, in which arrangement the centre tap forms a first direct-current output of the rectifier, and that
   b) the two ends of the secondary transformer winding (25) are connected to a second direct-current output of the rectifier via one load thyristor to be turned-off (30, 31) each.

6. Rectifier according to Claim 5, characterized in that a load thyristor (30', 31') is connected in antiparallel with each of these load thyristors (30, 31) to be turned off.

7. Rectifier according to Claim 5 or 6, characterized in that the centre tap of the secondary transformer winding (25) is effectively connected via the de-excitation resistor (40) and, on the one hand, via a first de-excitation diode (41) and a first reverse-conducting gate turnoff thyristor (38) in a first turn-off device of a first load thyristor (30) to be turned off which is connected to a first end of the transformer winding (25) and, on the other hand, via a second de-excitation diode (42) and a second reverse-conducting gate turn-off thyristor (39) in a second turn-off device of a second load thyristor (31) to be turned off, which is connected to a second end of the transformer winding (25), and to the second direct-current output of the rectifier.

8. Use of a rectifier according to one of Claims 1 to 7 for high-speed de-excitation of magnetic field windings of electric machines.

**Revendications**

1.- Redresseur, qui comporte, du côté d'entrée, une connexion de courant alternatif et, du côté de sortie, une connexion de courant continu,
   a) avec au moins un transistor de charge pour chaque phase du courant alternatif,
   b) avec au moins un dispositif de blocage pour les thyristors de charge,
   c) avec un limiteur de surtension (40, 41) parallèle à la sortie de tension continue du redresseur,
   d) dans lequel, pour chaque phase du courant alternatif, un dispositif de blocage propre (34, 36, 38; 35, 37, 39) est prévu,
   e) qui est connecté en parallèle à un transistor de charge (30, 31) à bloquer,
      caractérisé en ce que
   f) chacun des dispositifs de blocage comprend un condensateur de blocage propre (34, 35) et un transistor de blocage à conduction inverse (38, 39) qui y est connecté en série et qui est polarisé dans le même sens que le transistor de charge à bloquer associé.

2.- Redresseur suivant la revendication 1, caractérisé en ce que chaque dispositif de blocage comporte une bobine de blocage (36, 37) qui est connectée en série avec le condensateur de blocage (34, 35) et avec le transistor de blocage à conduction inverse (38, 39).

3.- Redresseur suivant la revendication 1 ou 2, caractérisé en ce que le limiteur de surtension comporte au moins une diode de désexcitation (41, 42) qui est connectée en série avec une résistance de désexcitation (40).

4.- Redresseur suivant l'une quelconque des revendications 1 à 3, caractérisé en ce que les thyristors de charge (30, 31) à bloquer forment des branches de pont d'un pont redresseur.

5.- Redresseur suivant l'une quelconque des revendications 1 à 3, caractérisé en ce que

a) la connexion de courant alternatif comporte un enroulement secondaire de transformateur (25) avec une prise mediane, la prise mediane formant une première sortie de courant continu du redresseur, et

b) les deux extrémités de l'enroulement secondaire de transformateur (25) sont connectées, par l'intermédiaire chaque fois d'un thyristor de charge à bloquer (30, 31), à une seconde sortie de courant continu du redresseur.

6.- Redresseur suivant la revendication 5, caractérisé en ce qu'un thyristor de charge (30', 31') est connecté de manière antiparallèle à chacun de ces transistors de charge (30, 31) à bloquer.

7.- Redresseur suivant la revendication 5 ou 6, caractérisé en ce que la prise médiane de l'enroulement secondaire de transformateur, par l'intermédiaire de la résistance de désexcitation (40) et d'une part, par l'intermédiaire d'une première diode de désexcitation (41) et d'un premier thyristor de blocage à conduction inverse (38) dans un premier dispositif de blocage d'un premier thyristor de charge à bloquer (30), qui est connecté à une première extrémité de l'enroulement de transformateur (25), et d'autre part, par l'intermédiaire d'une seconde diode de désexcitation (42) et d'un second thyristor de blocage à conduction inverse (39) dans un second dispositif de blocage d'un second thyristor de charge à bloquer (31), qui est connecté à une seconde extrémité de l'enroulement de transformateur (25), est en liaison active avec la deuxième sortie de courant continu du redresseur.

8. Utilisation d'un redresseur suivant l'une quelconque des revendications 1 à 7 pour la désexcitation rapide d'enroulements à champ magnétique de machines électriques.

FIG.1

FIG.2

FIG.3